(19) Europäisches Patentamt
European Patent Office
Office européen des brevets

(11) EP 1 255 071 A1

(12) **DEMANDE DE BREVET EUROPEEN**

(43) Date de publication:
**06.11.2002 Bulletin 2002/45**

(51) Int Cl.[7]: **F16L 55/033**, F02M 35/12, F01N 7/00, F04B 39/00

(21) Numéro de dépôt: **02291121.8**

(22) Date de dépôt: **03.05.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **04.05.2001 FR 0105983**

(71) Demandeur: **MECAPLAST SAM**
**MC-98000 Monaco (MC)**

(72) Inventeurs:
- **Le Meur, Nathalie**
  **62300 Lens (FR)**
- **Manni, Charles**
  **98000 Monaco (MC)**
- **Broute, Hugues**
  **59160 Lomme (FR)**

(74) Mandataire: **Debay, Yves**
**Cabinet Debay,**
**126 Elysée 2**
**78170 La Celle Saint Cloud (FR)**

(54) **Dispositif d'atténuation du niveau sonore d'un circuit de fluide gazeux**

(57) La présente invention concerne un dispositif d'atténuation du niveau sonore d'un circuit de fluide gazeux. Le dispositif selon l'invention est utilisé par exemple, dans un circuit d'admission d'air de moteur thermique ou dans un circuit d'air turbocompressé d'un moteur thermique, ou dans le circuit de gaz d'un compresseur.

Ce dispositif comprend en particulier une ou plusieurs cavités (20) insérées dans le circuit, et dont les conduits (10) d'entrée et/ou de sortie (11) se prolongent à l'intérieur de la cavité par un conduit (100, 110) interne, de longueur déterminée, de diamètre déterminé et de section non fermée sur au moins une partie de sa longueur à partir de son extrémité libre, ces paramètres et les paramètres de forme et de dimensions de la cavité étant déterminés pour répondre à des critères d'atténuation et modifiables selon les critères spécifiques à chaque application.

Fig.9A

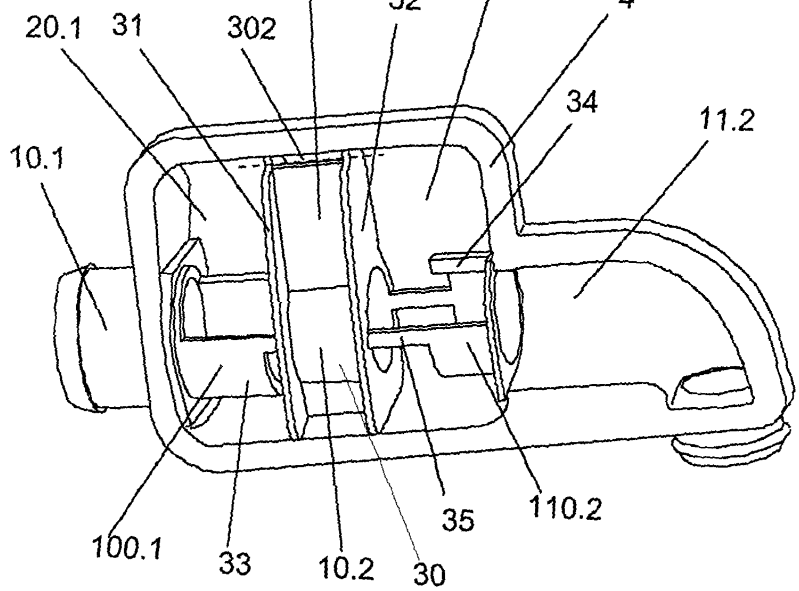


EP 1 255 071 A1

## Description

La présente invention concerne un dispositif d'atténuation du niveau sonore d'un circuit de fluide gazeux. Le dispositif selon l'invention est utilisé par exemple, dans un circuit d'admission d'air de moteur thermique ou dans un circuit d'air turbocompressé d'un moteur thermique, ou dans le circuit de gaz d'un compresseur.

Il est connu dans l'art antérieur par la demande de brevet internationale WO 97/09527 un dispositif atténuateur de bruit pour turbo compresseur. Le dispositif a pour but de réduire le bruit généré par la turbine du turbocompresseur lorsque le moteur tourne. Le dispositif est connecté entre la sortie du turbocompresseur et l'admission d'air du moteur. Selon la demande de brevet internationale WO 97/09527 le dispositif comprend, dans le conduit d'admission, une pluralité d'écrans comprenant chacun une ouverture dont le diamètre est au moins égal au diamètre du conduit. L'intervalle entre deux écrans forme alors une chambre de résonance permettant d'atténuer jusqu'à 20dB des bruits dont la fréquence est comprise entre 1 et 5 kHz. Un tel dispositif utilise essentiellement un effet de simple résonateur, qui permet une atténuation dans une certaine plage de fréquences, mais ne permet pas toujours d'ajuster la largeur de cette plage en fonction des besoins de l'application concernée.

Les demandes de brevets DE 195 04 223 et US 4 109 751 proposent de réaliser des conduits dépassant à l'intérieur de cavités, ces conduits étant soit percés soit écourtés pour utiliser ces cavités à des fins d'atténuation. Toutefois, ces dispositifs s'appliquent à une admission directe de moteur thermique, non munie de turbocompresseur. Or les vitesses de rotation d'un moteur thermique peuvent aller jusqu'aux environs de 15 000 t/mn, alors que les vitesses de rotation d'un turbocompresseur de suralimentation varient couramment entre 80 000 et 150 000 t/mn. Les bruits à atténuer présentent donc des intensités et plages de fréquences pouvant être très différentes de ceux atténués par ces dispositifs.

L'invention propose d'atténuer le niveau sonore d'un circuit de fluide gazeux par un dispositif simple, modulaire, adaptable à des critères déterminés, et autorisant une liberté de forme dans sa fabrication.

Ce but est atteint en deux variantes par un dispositif selon les revendications 1 et 2.

Des développements supplémentaires de l'invention sont décrits dans les revendications dépendantes.

L'invention, avec ses caractéristiques et avantages, ressortira plus clairement à la lecture de la description faite en référence aux dessins annexés dans lesquels :

- la figure 1 représente une vue en perspective d'un module du dispositif selon l'invention ;
- la figure 2 représente une vue simplifiée du dispositif selon l'invention ;
- les figures 3A, 3B, 4A, 4B, et 5A à 5C représentent trois variantes de réalisation du dispositif selon l'invention et la courbe d'atténuation obtenue avec chacune des variantes de réalisation ;
- les figures 6A et 6B représentent des coupes longitudinales et transversales d'une cavité d'un dispositif selon l'invention ;
- Les figures 7 et 7A représentent une vue simplifiée en coupe longitudinale d'un dispositif selon l'invention muni de deux cavités, avec conduits internes à encoches et cavités de hauteurs différentes, et respectivement la courbe d'atténuation obtenue avec cette variante ;
- les figures 8 et 8A représentent une vue simplifiée en coupe longitudinale d'un dispositif selon l'invention muni de deux cavités reliées par un conduit supplémentaire, et respectivement la courbe d'atténuation obtenue avec cette variante ;
- les figures 9A et 9B représentent des vues en éclaté d'un mode de réalisation du principe d'atténuateur selon l'invention, respectivement après et avant insertion de la pièce additionnelle.

Dans la suite de la description par dimensions déterminées il faut comprendre dimensions déterminées, par exemple par calcul, pour répondre à des critères d'atténuation déterminés, et modifiables selon les critères spécifiques à chaque application.

Le principe de l'invention va à présent être décrit en référence à la figure 1. Comme expliqué précédemment, le dispositif selon l'invention est destiné à réduire les niveaux de bruits générés dans un conduit ou un tuyau ou bien une conduite d'admission de gaz, par un système connecté à l'une des extrémités du conduit, du tuyau ou de la conduite. Le dispositif s'applique plus particulièrement à la réduction du niveau de bruit dans une conduite d'admission d'air connectée à un turbocompresseur. Le dispositif peut être mis en place sur la conduite d'arrivée d'air, y compris sur les conduits d'arrivée et de sortie d'air du turbo compresseur d'un moteur et/ou d'un compresseur et/ou sur la conduite d'air montée entre la sortie air du turbocompresseur et l'admission d'air d'un moteur thermique. Le dispositif comprend au moins un module (1) comprenant une cavité (20) de forme et de dimensions déterminées et un conduit (10), appelé conduit d'entrée, connecté à une première extrémité (201) de la cavité (20) correspondant, par exemple, à l'extrémité amont de la cavité (20) par rapport au sens d'écoulement du fluide représenté par la flèche A. La deuxième extrémité (202) de la cavité (20), correspondant, par exemple, à l'extrémité aval est également connectée à un conduit (11) appelé conduit de sortie. Le conduit (10) d'entrée ainsi que le conduit (11) de sortie peuvent prendre des formes diverses. La section transversale de ces conduits pourra, par exemple, être fermée, telle que circulaire ou ovoïde, ou ouverte, telle que, par exemple, en forme de « C ».

La forme de chaque cavité (20) dépend principalement de l'environnement dans lequel elle est montée, et du niveau d'atténuation souhaité pour un bruit émettant dans une plage de fréquence déterminée. L'atténuation du niveau de bruit pour une plage de fréquence déterminée est fonction du rapport entre la surface de la section du conduit (10) d'entrée et la surface de la section de la cavité (20). Enfin, plus la cavité est longue, plus l'atténuation est large bande sur l'ensemble de la plage de fréquence atténuée par la cavité (20). Ainsi, pour une même plage de fréquence et une même différence entre la surface de la section du conduit (10) d'entrée et la surface de la cavité (20), une cavité de longueur importante va générer une atténuation homogène sur l'ensemble de la plage de fréquences, alors qu'une cavité plus courte va générer une courbe d'atténuation d'allure sensiblement sinusoïdale. Dans ce dernier cas, certaines fréquences de la plage de fréquences seront atténuées alors que d'autres ne le seront pas ou peu.

Dans une variante de réalisation, le dispositif selon l'invention peut être réalisé en matière plastique et être intégré à une pièce ou un ensemble situé sous le capot moteur et réalisant une autre fonction. Cette pièce sous le capot moteur peut être, par exemple, la boîte à eau du radiateur ou une pièce de cartérisation. Cette intégration est réalisée par la fabrication d'une pièce plastique monobloc comportant au moins la pièce ou une partie de l'ensemble et tout ou partie du dispositif selon l'invention. Dans un exemple de réalisation, le dispositif selon l'invention est réalisé en deux parties. Dans cette variante, chaque module du dispositif comprend deux demi-modules. Chaque demi-module est alors intégré, dans une même pièce monobloc, avec une autre pièce ou un ensemble situé sous le capot moteur. Lors du montage définitif, les deux parties du dispositif sont assemblées par des moyens classiques d'assemblage de pièces plastiques.

Il est également possible par le procédé d'injection plastique avec noyau fusible de réaliser en une seule pièce plastique monobloc, le dispositif selon l'invention intégré à une autre pièce ou une partie d'un autre ensemble situé sous le capot moteur. La pièce pourra également être réalisée, par exemple, par soufflage, collage ou soudage.

Selon l'invention, pour chaque module (1) l'axe longitudinal du conduit (10) d'entrée et l'axe longitudinal du conduit (11) de sortie sont disposés de façon à minimiser les pertes de charge dans le flux de gaz circulant dans le dispositif, ceci afin d'obtenir un rendement optimal du moteur et du turbocompresseur

La position optimale des axes des conduits (10, 11) d'entrée et de sortie d'une cavité est réalisée lorsque les axes longitudinaux des conduits (10, 11) d'entrée et de sortie sont alignés. Dans cette configuration, l'atténuation d'un module est optimale pour la plage de fréquence choisie. Lorsque les axes des conduits (10, 11) d'entrée et de sortie d'une cavité ne sont pas alignés, l'atténuation est dégradée par rapport à l'atténuation optimale, c'est-à-dire que le niveau de certains bruits émettant dans une plage de fréquences déterminées sera moins atténué que dans la configuration optimale. Ce cas de figure se présente lorsque l'environnement extérieur du module (1) ne permet pas cet alignement. En effet, comme expliqué précédemment, le dispositif selon l'invention peut être mis en place sur la conduite d'admission d'air d'un moteur. Or, le compartiment moteur est en règle générale très encombré, par conséquent, la position des conduits (10, 11) d'entrée et de sortie est dictée par des contraintes d'encombrement.

Selon la variante de réalisation représentée figure 1, le conduit (10) d'entrée et/ou le conduit (11) de sortie peuvent être prolongés à l'intérieur de la cavité (20) par une portion (100, 110) de conduit, appelée conduit interne, de longueur, de diamètre et de forme déterminés. Le ou les conduits internes (100, 110) ont pour fonction de modifier la courbe d'atténuation de la cavité (20). D'une manière générale, un conduit (100, 110) interne permet d'atténuer d'une valeur déterminée un bruit compris dans une plage réduite de fréquences déterminée. Selon l'invention, plus la longueur des conduits internes (100, 110) est importante, plus la plage de fréquence atténuée est basse. La fréquence centrale de la bande d'atténuation générée par un conduit interne est fonction de la longueur de ce conduit interne. La fonction des conduits (100, 110) internes est de modifier la plage de fréquences d'atténuation d'un module (1) ou bien de compenser les dégradations de l'atténuation occasionnée par des contraintes d'environnement ou encore de déplacer le pic d'atténuation maximum de la cavité. En effet, la plage de fréquences pour laquelle un conduit (100, 110) interne est efficace est réduite. Ainsi pour augmenter ou pour déplacer la plage de fréquences des bruits atténués par un module, il suffit de choisir la longueur du conduit interne (100, 110) pour que la fréquence du bruit atténué par le conduit interne (100, 110) corresponde sensiblement, soit à l'une des bornes de la plage de fréquences atténuée par la cavité, soit à l'une des fréquences dont l'atténuation est dégradée par les contraintes d'environnement, soit pour que le pic d'atténuation soit décalé.

Lorsqu'une cavité (20) ne comprend qu'un conduit interne (100, 110), l'influence de ce conduit interne sur les caractéristiques d'atténuation de bruit de la cavité est sensiblement identique que le conduit interne soit solidaire du conduit d'entrée (10) ou que le conduit interne soit solidaire du conduit de sortie (11) de la cavité (20).

Plus le rapport entre la surface de la section du conduit interne et la surface de la section de la cavité augmente plus l'atténuation augmente. De même, la plage d'atténuation d'un conduit interne ne dépend pas directement de la plage de fréquence atténuée par la cavité d'un module. En effet, la plage de fréquence d'atténuation d'un conduit interne peut être située en dehors de la plage de fréquence d'atténuation d'un module.

Selon une autre variante, pour modifier la courbe d'atténuation et notamment pour modifier le niveau d'atténuation du dispositif selon l'invention, la surface intérieure d'au moins une cavité d'un module peut être recouverte, au moins en partie, par un matériau poreux ou fibreux. Une autre variante de réalisation consiste à remplir au moins partiellement le volume d'au moins une cavité d'un module avec un matériau poreux ou fibreux.

Selon une variante de réalisation, lorsqu'une cavité (20) comprend un conduit interne (100, 110) à la fois sur le conduit (10) d'entrée et sur le conduit (11) de sortie, les extrémités libres de chaque conduit interne (100, 110) sont reliées, par exemple, par au moins une lamelle (non représentée) rigide. Cette ou ces lamelles permettent de faciliter la fabrication et le montage du dispositif et est par conséquent conformée pour ne pas dégrader les caractéristiques acoustiques du module (1). La mise en place de cette ou ces lamelles permet notamment de faciliter le montage des cavités (20). En effet, dans ce mode de fabrication, chaque cavité (20) est constituée de deux demi-coques. L'assemblage des demi-coques pour former chaque cavité (20), est réalisé autour du conduit formé par les conduits (10, 11) d'entrée et de sortie reliée entre eux par au moins une lamelle.

La figure 2 représente le dispositif selon l'invention comprenant un nombre n déterminé de modules (1.1, 1.2, 1.n), tel que décrit en référence à la figure 1. Pour des raisons de simplification graphique tous les axes des conduits (10.1, 11.1, 10.2, 11.2, 10.3, 10.n, 11.n-1, 11.n) sont confondus et les cavités (20.1, 20.2, 20.n) sont identiques et sensiblement cylindriques.

Lorsque plusieurs modules (1.1, 1.2, 1.n) sont mis en place en série sur un conduit d'admission d'air, le conduit (11.1) de sortie du module (1.1) situé le plus en amont correspond également au conduit d'entrée (10.2) du module (1.2) immédiatement adjacent. Il en est de même pour tous les modules suivants, hormis le module (1.n) le plus en aval. Pour ce dernier module (1.n) le conduit (10.n) d'entrée correspond au conduit (11.n-1) de sortie du module adjacent amont, et le conduit de sortie (11.n) est connecté, par exemple, à l'entrée d'un turbocompresseur ou à l'entrée d'air d'un moteur thermique.

Le nombre de modules (1.1, 1.2, 1.n), la forme de chaque cavité (20.1, 20.2, 20.n), les dimensions (L1, L2) de chaque conduit interne (100.1, 110.1, 110.1, 110.2, 100.n, 110.n), ainsi que la distance (L3) entre deux cavités (20.1, 20.2, 20.n) sont déterminés, par exemple par calcul ou par expérimentation, en fonction du niveau d'atténuation que l'on souhaite obtenir pour une plage de fréquences déterminée. La règle générale est que l'atténuation totale d'un dispositif à n modules selon cette variante ne correspond pas exactement à la somme des atténuations de chaque module (1.1, 1.2, 1.n), mais correspond à une combinaison des caractéristiques acoustiques de chaque module et de la distance entre modules. En effet, la distance entre deux cavités de deux modules adjacents a une influence sur l'atténuation obtenue par les deux modules. La distance entre deux cavités dépend de la plage de fréquences du bruit que l'on veut atténuer. Ainsi, la courbe d'atténuation d'un dispositif selon l'invention comprenant deux modules (1) en série ne correspond pas exactement à la somme des deux courbes d'atténuation de deux dispositifs comprenant chacun un module (1) correspondant à l'un des modules précédents.

Les figures 3A et 3B représentent une première variante de réalisation du dispositif selon l'invention et la courbe d'atténuation obtenue avec cette variante. Selon cette première variante, le dispositif comprend un seul module (1) comprenant une cavité (20) cylindrique ne comprenant pas de conduit interne. Les conduits (10, 11) d'entrée et de sortie ont le même diamètre et ont leurs axes alignés. Selon l'invention la formule déterminant la courbe d'atténuation d'un tel dispositif est:

$$TL = 10\log\left[1 + \frac{1}{4}\left(m - \left(\frac{1}{m}\right)^2\right)\sin^2(kL)\right]$$

où TL correspond au niveau d'atténuation en dB,

m correspond au rapport entre la surface de la section du conduit d'entrée et la section de la cavité,

L est la longueur de la cavité,

et k est le nombre d'ondes

La courbe d'atténuation représentée à la figure 3B correspond à un module ayant les dimensions suivantes :

- diamètre (D1) des conduits d'entrée et de sortie: 37mm
- diamètre (D2) de la cavité (20): 69mm
- longueur (L4) de cavité: 40mm

La courbe (fig. 3B) représentant l'atténuation obtenue en fonction de la fréquence du bruit, atteint une atténuation maximum de 6dB pour une plage de fréquences comprise entre 1700 et 2700Hz. De part et d'autre de cette plage de fréquences l'atténuation décroît jusqu'à 0dB lorsque la fréquence est égale à zéro ou à 4500Hz.

Les figures 4A et 4B représentent une deuxième variante de réalisation du dispositif selon l'invention et la courbe d'atténuation obtenue avec cette variante. Selon cette deuxième variante, le dispositif comprend deux modules (1.1, 1.2) en série, chacun de formes et de dimensions identiques au module utilisé dans la première variante. De même, tous les conduits d'entrée et de sortie des modules (1.1, 1.2) sont de même diamètre et ont leurs axes alignés. La courbe représentée à la figure 4B est obtenue pour une distance entre les deux modules égale à 20mm. Cette courbe représentant le niveau d'atténuation en fonction de la fréquence, est obtenue par l'intermédiaire d'un calcul matriciel. La plage de fréquences d'atténuation est comprise entre 1200 et 4000 Hz. Ainsi, on constate que cette plage de fréquences est plus étroite que la plage de fréquences obtenue avec le dispositif selon la première variante (0 à 4500Hz), ce qui confirme que les caractéristiques d'atténuation d'un dispositif à plusieurs modules ne correspondent pas à la somme des caractéristiques du dispositif à un seul module. L'atténuation maximum est de 15dB et est obtenue pour des bruits d'une fréquence égale à 2500Hz. On constate donc que l'atténuation maximum est quasiment trois fois supérieure à l'atténuation obtenue avec le dispositif selon la première variante. De part et d'autre de cette fréquence d'atténuation maximum, le niveau d'atténuation décroît jusqu'à 0dB. Ainsi, les caractéristiques d'atténuation du dispositif selon la deuxième variante de réalisation dépendent à la fois de la géométrie des cavités des modules (1.1, 1.2) mais également de l'écartement des modules. Il est possible d'obtenir avec deux modules identiques des courbes d'atténuation de bruits différentes en fonction de l'écartement des deux modules. Le choix d'une courbe d'atténuation parmi d'autres dépend essentiellement du choix de l'utilisateur et notamment de la sélection de la plage de fréquences de bruits qui doivent être atténuées.

Les figures 5A à 5B représentent une troisième variante de réalisation du dispositif selon l'invention et la courbe d'atténuation obtenue avec cette variante. Selon cette deuxième variante, le dispositif comprend deux modules (1.3, 1.4) en série. Les cavités (20.3, 20.4) de chaque module ont la même forme et les mêmes dimensions. La figure 5B représente une coupe transversale d'une cavité (20.3) d'un module (1.3, 1.4). Selon la troisième variante, la forme de la section de chaque cavité (20.3, 20.4) est non circulaire, et par exemple sensiblement ovoïde, comme représenté par la section en figures 5B, 6A et 6B, et le conduit (10.3) d'entrée est placé dans la partie de la section de plus grande dimension. L'axe (d10.3) de ce conduit (10.3) d'entrée peut en particulier être situé à une distance (E3) déterminée non nulle du barycentre (B3) de la section transversale de cette même cavité (20.3). Dans le cas où un conduit (100.1, 110.2) interne présente une section ouverte, cette ouverture pourra en particulier être orientée vers la partie de la cavité (20.1, 20.2) présentant le plus grand volume ou la plus grande hauteur (h41) transversalement à l'axe de ce conduit interne à son extrémité libre.

La cavité (20.3) a un diamètre équivalent identique au diamètre des cavités des modules des première et deuxième variantes. En d'autres termes, le rapport des surfaces des sections du conduit (10.3) d'entrée et de la cavité (20.3) de la troisième variante est identique au rapport des surfaces des sections du conduit d'entrée et de la cavité des première et deuxième variantes. Selon la troisième variante, les conduits (10.3, 11.3, 10.4, 11.4) d'entrée et de sortie des deux modules (1.4, 1.3) sont de même diamètre et ont leurs axes alignés. Chaque cavité (20.3, 20.4) comprend un seul conduit interne (100.3, 110.4). Le conduit (100.3) interne de la cavité (20.3) du module amont (1.3) est solidaire du conduit (10.3) d'entrée du module amont (1.3). Selon la troisième variante de réalisation, la longueur (L1) du conduit (100.3) interne du module (1.3) amont est de 30mm. Le conduit (110.4) interne de la cavité (20.4) du module (1.4) aval est solidaire du conduit (11.3) de sortie du module (1.4). Selon la troisième variante de réalisation, la longueur (L2) du conduit (110.3) interne du module (1.4) aval est de 11 mm et permet l'atténuation d'une fréquence plus élevée que celle effectuée par le premier conduit (100.3) interne de longueur (L1) plus longue.

La courbe représentée à la figure 5C est obtenue pour une distance (L3), entre les deux modules, égale à 20 mm. Cette courbe représentant le niveau d'atténuation en fonction de la fréquence, est réalisée par une mesure acoustique. La plage de fréquences atténuée est comprise entre 1200 et 4000 Hz. La courbe comprend deux pics (P1, P2) d'atténuation. Comme expliqué précédemment, chaque pic (P1, P2) correspond à la présence d'un conduit (100.3, 110.4) interne. Le premier pic (P1) est obtenu pour une fréquence de 1700Hz et l'atténuation correspondante est de 35dB. Ce pic (P1) correspond à l'atténuation obtenue avec le conduit (100.3) interne ayant la longueur (L1) la plus importante, c'est à dire le conduit (100.3) interne du module (1.3) amont. Le deuxième pic (P2) est obtenu pour une fréquence de 3000Hz et l'atténuation correspondant est de 35dB. Ce deuxième pic (P2) correspond à l'atténuation obtenue avec le conduit (110.4) interne ayant la longueur (L2) la plus faible, c'est à dire le conduit (110.4) interne du module (1.4) aval. Entre les deux pics (P1, P2), c'est-à-dire pour des fréquences comprises entre 1700Hz et 3000Hz le niveau d'atténuation est d'au moins 20dB. Ainsi, la mise en place des conduits (100.3, 110.4) internes permet d'élargir la plage de fréquences pour laquelle l'atténuation est efficace. En effet, dans la deuxième variante de réalisation, le niveau d'atténuation de 20dB est obtenu pour une fréquence de l'ordre de 2500Hz. En ajoutant les deux conduits (100.3, 110.4) internes, l'atténuation des 20dB est obtenue pour une plage de fréquences allant de 1500Hz à 3200Hz.

Ainsi, le dispositif selon l'invention permet, en choisissant la taille ou la forme des cavités, le diamètre des conduits, la distance entre les modules et la mise en place de conduits internes de longueur donnée, d'obtenir une courbe d'atténuation conforme à des critères d'atténuation précis et prenant en compte les contraintes d'environnement imposées, telles que la place disponible sous le capot moteur.

Selon une variante, le plastique peut être remplacé par tout autre matériau ayant des caractéristiques, notamment mécaniques, thermiques et chimiques sensiblement équivalentes à celles du plastique et compatibles, notamment avec une installation sous le capot moteur d'un véhicule. Ainsi, le dispositif selon l'invention peut être réalisé en métal, en alliage métallique ou en matériau composite.

Dans les modes de réalisation ou un conduit (100, 110) interne présente une partie de section ouverte, la longueur concernée par cette section ouverte peut avoir une influence sensible sur le résultat obtenu, en fréquence ou en importance d'atténuation. Une partie ouverte à section en « C », dénommée encoche et représentée en figures 6a et 6b, à l'extrémité libre du conduit (10.1) interne permet ainsi d'éviter que la présence de la cavité ne perde trop de son influence par rapport à l'atténuation provoquée par le conduit interne en luimême. La longueur de cette encoche peut donc être un paramètre important quant au résultat obtenu. Ainsi, l'expérimentation et le calcul ont montré que de bons résultats étaient obtenus avec une encoche d'une longueur supérieure au tiers de la longueur du conduit interne à l'intérieur de la cavité.

Un mode de réalisation appliqué en particulier à l'alimentation d'un turbocompresseur de moteur thermique est représenté en figures 7 et 8, et comporte deux cavités (20.1, 20.2) reliées entre elles par un conduit (10.2). Dans ce mode de réalisation, une première cavité (20.1) située à l'opposé du côté du turbocompresseur comporte un conduit (100.1) interne d'entrée d'une longueur (L1) déterminée, et présente à son extrémité libre une encoche à section en « C », sur une longueur (Le1) déterminée. Une deuxième cavité (20.2), dite cavité turbo, située du côté du turbocompresseur, présente un conduit (110.2) interne de sortie d'une longueur (L2) déterminée, et présente à son extrémité libre une encoche à section en « C », sur une longueur (Le2) déterminée. De bons résultats ont alors été obtenus avec un conduit (110.2) interne de sortie de la cavité turbo présentant une encoche d'une longueur (Le2) supérieure à un tiers de la longueur dudit conduit (110.2) interne, et pouvant aller jusqu'à une longueur sensiblement égale à la longueur dudit conduit interne.

Dans les modes de réalisation comportant plusieurs modules ou plusieurs cavités, la distance (L3) entre ces cavités peut avoir une influence sensible sur le résultat obtenu, en fréquence ou en importance d'atténuation. Ainsi, l'expérimentation et le calcul ont montré que de bons résultats étaient obtenus avec une distance (L3) entre deux cavités successives valant plus de 0,4 fois la longueur de ces cavités, ou de l'une de ces cavités. Une première règle est proposée où cette distance (L3) vaut environ la moitié de la longueur (L4) d'une cavité. Plus précisément, de bons résultats ont été obtenus avec une distance (L3) entre cavités valant plus de 0,6 fois cette longueur, par exemple à une valeur de 0,74 fois cette longueur.

Ainsi un mode de réalisation, appliqué à l'alimentation d'un turbocompresseur de moteur thermique, comportant deux cavités est représenté en figures 7 et 8. Dans ce mode de réalisation, une première cavité (20.1), dite cavité répartiteur, située à l'opposé du côté du turbocompresseur a été ajustée en longueur et en écartement par rapport à l'autre cavité (20.2). De bons résultats ont alors été obtenus avec une distance (L3) de 26 mm pour une longueur (L41) de première cavité valant 35 mm. Dans ce cas, la longueur (L42) de la deuxième cavité était de 39 mm. Les diamètres (D1, D2) des conduits internes des cavités étaient de 36 mm, et la longueur des conduits internes des cavités répartiteurs et turbo étaient respectivement de 29 mm L1 et 21 mm pour L2, avec chacun une encoche à section en « C » sur sensiblement toute sa longueur.

Dans les modes de réalisation comportant plusieurs modules ou plusieurs cavités, la hauteur maximale de ces cavités, selon une section transversale à l'axe des conduits en leur extrémité débouchant dans chaque cavité, peut également avoir une influence, en fréquence ou en importance d'atténuation. En effet, le fait que deux cavités présentent des hauteurs différentes permet en particulier d'obtenir un effet d'atténuation dans des fréquences différentes, ce qui permet alors d'élargir le spectre total d'atténuation résultant de ces deux cavités.

Ainsi, l'expérimentation et le calcul ont montré que de bons résultats étaient obtenus avec deux cavités, par exemple successives et représentées en figures 7 et 8, présentant des hauteurs (h41, h42) maximales différant de plus de 3 millimètres, et par exemple d'une valeur de 6 mm. Pour des diamètres de conduits d'entrée et de sortie valant 36 mm, cette différence de hauteur s'applique à des hauteurs maximales d'au moins 25 mm et par exemple comprises entre 25 mm et 100 mm, la valeur de cette hauteur étant déterminée en fonction de la valeur des fréquences dont l'atténuation est recherchée.

Dans les modes de réalisation comportant plusieurs modules ou plusieurs cavités, la position des conduits reliant plusieurs cavités entre elles peut également avoir une influence, en fréquence ou en importance d'atténuation. Dans un mode de réalisation représenté en figure 8, le dispositif peut comprendre plusieurs conduits reliant deux cavités entre elles. Ainsi, en plus du premier conduit (10.2) situés dans l'axe des conduits d'entrée (10.1) et de sortie (10.3), la cavité (20.1) répartiteur et la cavité (20.2) turbo sont reliées par un deuxième conduit (312) situé en dehors de cet axe. Dans l'exemple présenté ici, la présence de ce deuxième conduit permet en particulier d'élargir le spectre d'atténuation, en particulier vers les basses fréquences. Ainsi qu'il est visible entre les figures 7A et 8A, on obtient en effet une meilleure atténuation autour des 1500 Hz dans le cas de deux conduits.

Dans un mode de réalisation (non représenté), un module comporte un volume intérieur séparé en plusieurs cavités par un rétrécissement formé par les parois intérieures de ce module.

La figure 9 représente un mode de réalisation du principe d'atténuateur correspondant à la figure 8a. Dans ce mode de réalisation, les volumes des cavités (20.1, 20.2) reliés entre eux par un ou plusieurs étranglements, sont réalisés en incorporant, dans une enveloppe creuse moulée, une ou plusieurs pièces (3) additionnelles formant les cloisons (31, 32) de séparation des volumes de ces cavités (20.1, 20.2). Cette enveloppe peut être réalisée en particulier par un boîtier (4), fermé par un couvercle (41) après insertion de la pièce (3) additionnelle. Un anneau (30) forme le conduit (10.2) ou étranglement de communication entre les deux cavités (20.1, 20.2). Un canal fermé ou ouvert traverse la pièce (3) additionnelle et relie des ouvertures ménagées dans ses deux parois (31, 32) transversales, réalisant ainsi un conduit (302) supplémentaire reliant ainsi les deux cavités (20.1, 20.2). Ce canal peut en particulier être formé par une rainure portée par la surface extérieure de la pièce (3) additionnelle au contact de l'enveloppe (4). Des bagues (33, 34) ouvertes sont reliées à l'anneau (30) par des prolongements en forme de lamelles (35) pour former des prolongements aux conduits d'entrée (10.1) et de sortie (11.2) du boîtier (4), réalisant ainsi des conduits internes (100.1, 110.2).

Ainsi, l'invention propose un dispositif d'atténuation du niveau sonore d'un circuit de fluide gazeux comportant un turbo-compresseur ou un compresseur, caractérisé en ce qu'il comprend au moins un module (1), réalisé en matière plastique ou dans un matériau ayant des propriétés mécaniques, thermiques et chimiques sensiblement équivalentes, comportant un conduit (10) dit d'entrée, connecté à une première extrémité (201) d'une cavité (20) de dimensions et de forme déterminées, la deuxième extrémité (202) de la cavité (20) étant également connectée à un conduit (11) dit de sortie correspondant au conduit (10) d'entrée d'un module (1) adjacent du même type ou à un conduit indépendant, le conduit (10) d'entrée et/ou le conduit (11) de sortie de la cavité (20) se prolongeant à l'intérieur de la cavité par une portion de conduit (100, 110), dit interne, de longueur déterminée, de diamètre déterminé et de section non fermée sur au moins une partie de sa longueur à partir de son extrémité libre, ces paramètres et les paramètres de forme et de dimensions de la cavité étant déterminés pour répondre à des critères d'atténuation et modifiables selon les critères spécifiques à chaque application.

Selon une particularité, au moins un conduit interne présente une section non fermée, à son extrémité libre, sur au moins un tiers de sa longueur.

Selon une particularité, au moins un module (1) présente une forme comportant un rétrécissement ou étranglement dans un plan sensiblement transversal aux conduits d'entrée (10.1) et de sortie (11.1) ou dans un plan compris entre un plan transversal au conduit (10.1) d'entrée et un plan transversal au conduit (11.1) de sortie.

En une autre variante, l'invention propose un dispositif d'atténuation du niveau sonore d'un circuit de fluide gazeux comportant un turbocompresseur ou un compresseur, caractérisé en ce qu'il comprend au moins deux modules (1), chacun des modules étant en matière plastique ou dans un matériau ayant des propriétés mécaniques, thermiques et chimiques sensiblement équivalentes, un module comportant un conduit (10) dit d'entrée, connecté à une première extrémité (201) d'une cavité (20) de dimensions et de forme déterminées, la deuxième extrémité (202) de la cavité (20) étant également connectée à un conduit (11) dit de sortie correspondant au conduit (10) d'entrée du module (1) adjacent ou à un conduit indépendant, la distance entre deux modules étant déterminée pour que la courbe d'atténuation du bruit du dispositif réponde à des critères d'atténuation fixés par un utilisateur, cette distance (L3) étant modifiable en fonction de ces critères.

Selon une particularité, la distance entre les cavités de deux modules successifs est supérieure à 0,4 fois la valeur de la longueur de l'une de ces cavités.

Selon une particularité, la distance entre les cavités de deux modules successifs est supérieure à 0,6 fois la valeur de la longueur de l'une de ces cavités.

Selon une particularité, tout ou partie du dispositif selon l'invention est intégré dans une même pièce plastique monobloc ou intégré à une pièce ou un ensemble de pièces situé sous le capot moteur d'un véhicule et réalisant une fonction distincte de l'atténuation du niveau sonore d'un circuit de fluide gazeux.

Selon une particularité, les axes des conduits (10, 11) d'entrée et de sortie d'au moins une cavité sont confondus.

Selon une particularité, le conduit (10) d'entrée et/ou le conduit (11) de sortie d'au moins une cavité (20) se prolonge à l'intérieur de la cavité par une portion de conduit (100, 110), dit interne, de longueur déterminée, de diamètre déterminé et de forme déterminée pour répondre à des critères d'atténuation spécifiques à chaque application.

Selon une particularité, au moins un conduit interne présente une section non fermée sur au moins une partie de sa longueur à partir de son extrémité libre.

Selon une particularité, au moins un conduit interne présente une section non fermée, à son extrémité libre, sur au moins un tiers de sa longueur.

Selon une particularité, le volume intérieur de la cavité (20) est rempli totalement ou partiellement d'un matériau poreux ou fibreux.

Selon une particularité, la surface intérieure de la cavité (20) est recouverte totalement ou partiellement d'un matériau poreux ou fibreux.

Selon une particularité, la distance entre le conduit d'entrée et le conduit de sortie chaque cavité, le rapport entre la surface de la section du conduit d'entrée et la surface de la section de chaque cavité, longueur de chaque conduit interne sont déterminés pour que la courbe d'atténuation du bruit du dispositif réponde à des critères d'atténuation fixés par l'utilisateur.

Selon une particularité, au moins une cavité présente une section transversale non circulaire, l'entrée d'au moins un conduit dans cette cavité étant situé à une distance déterminée non nulle du barycentre de cette section.

Selon une particularité, au moins deux cavités sont reliées entre elles par plus d'un conduit.

Selon une particularité, deux cavités successives présentent des sections transversales d'une hauteur maximale différant de plus de 3 millimètres l'une de l'autre.

Selon une particularité, le dispositif présente une première cavité d'une longueur comprise entre 33 mm et 37 mm, suivie d'une deuxième cavité d'une longueur comprise entre 37 mm et 41 mm, ces cavités étant séparées par une distance comprise entre 24 mm et 28 mm.

Selon une particularité, la première cavité présente un conduit interne d'une longueur comprise entre 27 mm et 31 mm, la deuxième cavité présentant un conduit interne d'une longueur comprise entre 19 mm et 23 mm.

Selon une particularité, le dispositif comprend une enveloppe (1) creuse comportant au moins un conduit (10.1) d'entrée et un conduit (11.2) de sortie, le volume intérieur de cette enveloppe recevant une ou plusieurs pièces (3) additionnelles formant des cloisons (31, 32) transversales réalisant la séparation du volume intérieur en plusieurs cavités (20.1, 20.2), ou formant des parois (33, 34) prolongeant l'un ou les deux conduits d'entrée ou de sortie et réalisant les parois de conduits internes (100.1, 110.2).

Selon une particularité, les extrémités libres des conduits (100, 110) internes d'au moins une cavité (20) sont reliées entre elles ou à une pièce additionnelle intérieure par une pluralité de lamelles (35) rigides.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif d'atténuation du niveau sonore d'un circuit de fluide gazeux comportant un turbo-compresseur ou un compresseur, **caractérisé en ce qu'**il comprend au moins un module (1), réalisé en matière plastique ou dans un matériau ayant des propriétés mécaniques, thermiques et chimiques sensiblement équivalentes, comportant un conduit (10) dit d'entrée, connecté à une première extrémité (201) d'une cavité (20) de dimensions et de forme déterminées, la deuxième extrémité (202) de la cavité (20) étant également connectée à un conduit (11) dit de sortie correspondant au conduit (10) d'entrée d'un module (1) adjacent du même type ou à un conduit indépendant, le conduit (10) d'entrée et/ou le conduit (11) de sortie de la cavité (20) se prolongeant à l'intérieur de la cavité par une portion de conduit (100, 110), dit interne, de longueur déterminée, de diamètre déterminé et de section non fermée sur au moins une partie de sa longueur à partir de son extrémité libre, ces paramètres et les paramètres de forme et de dimensions de la cavité étant déterminés pour répondre à des critères d'atténuation et modifiables selon les critères spécifiques à chaque application.

2. Dispositif d'atténuation du niveau sonore d'un circuit de fluide gazeux selon la revendication 1, **caractérisé en ce qu'**au moins un conduit interne présente une section non fermée, à son extrémité libre, sur au moins un tiers de sa longueur.

3. Dispositif d'atténuation du niveau sonore d'un circuit de fluide gazeux selon l'une des revendications 1 à 2, **caractérisé en ce que** la cavité (20) d'au moins un module (1) présente une forme comportant un rétrécissement ou étranglement dans un plan sensiblement perpendiculaire à l'axe des conduits d'entrée (10.1) et de sortie (11.1) ou dans un plan compris entre un plan perpendiculaire à l'axe du conduit (10.1) d'entrée et un plan perpendiculaire à l'axe du conduit (11.1) de sortie.

4. Dispositif d'atténuation du niveau sonore d'un circuit de fluide gazeux comportant un turbo-compresseur ou un compresseur, **caractérisé en ce qu'**il comprend au moins deux modules (1), chacun des modules étant en matière plastique ou dans un matériau ayant des propriétés mécaniques, thermiques et chimiques sensiblement équivalentes, un module comportant un conduit (10) dit d'entrée, connecté à une première extrémité (201) d'une cavité (20) de dimensions et de forme déterminées, la deuxième extrémité (202) de la cavité (20) étant également connectée à un conduit (11) dit de sortie correspondant au conduit (10) d'entrée du module (1) adjacent ou à un conduit indépendant, la distance entre deux modules étant déterminée pour que la courbe d'atténuation du bruit du dispositif réponde à des critères d'atténuation fixés par un utilisateur, cette distance (L3) étant modifiable en fonction de ces critères.

5. Dispositif d'atténuation du niveau sonore d'un circuit de fluide gazeux selon la revendication 4, **caractérisé en ce que** la distance entre les cavités de deux modules successifs est supérieure à 0,4 fois la valeur de la longueur de l'une de ces cavités.

6. Dispositif d'atténuation du niveau sonore d'un circuit de fluide gazeux selon l'une des revendications 3 à 4, **caractérisé en ce que** la distance entre les cavités de deux modules successifs est supérieure à 0,6 fois la valeur de la longueur de l'une de ces cavités.

**7.** Dispositif d'atténuation du niveau sonore d'un circuit de fluide gazeux selon l'une des revendications 1 à 6, **caractérisé en ce que** tout ou partie du dispositif selon l'invention est intégré dans une même pièce plastique monobloc ou intégré à une pièce ou un ensemble de pièces situé sous le capot moteur d'un véhicule et réalisant une fonction distincte de l'atténuation du niveau sonore d'un circuit de fluide gazeux.

**8.** Dispositif d'atténuation du niveau sonore d'un circuit de fluide gazeux selon la revendication 1 à 7, **caractérisé en ce que** les axes des conduits (10, 11) d'entrée et de sortie d'au moins une cavité sont confondus.

**9.** Dispositif d'atténuation du niveau sonore d'un circuit de fluide gazeux selon l'une des revendications 2 à 8, **caractérisé en ce que** le conduit (10) d'entrée et/ou le conduit (11) de sortie d'au moins une cavité (20) se prolonge à l'intérieur de la cavité par une portion de conduit (100, 110), dit interne, de longueur déterminée, de diamètre déterminé et de forme déterminée pour répondre à des critères d'atténuation spécifiques à chaque application.

**10.** Dispositif d'atténuation du niveau sonore d'un circuit de fluide gazeux selon l'une des revendications 4 à 9, **caractérisé en ce qu'**au moins un conduit interne présente une section non fermée sur au moins une partie de sa longueur à partir de son extrémité libre.

**11.** Dispositif d'atténuation du niveau sonore d'un circuit de fluide gazeux selon l'une des revendications 4 à 10, **caractérisé en ce qu'**au moins un conduit interne présente une section non fermée, à son extrémité libre, sur au moins un tiers de sa longueur.

**12.** Dispositif d'atténuation du niveau sonore d'un circuit de fluide gazeux selon l'une des revendications 1 à 11, **caractérisé en ce que** le volume intérieur de la cavité (20) est rempli totalement ou partiellement d'un matériau poreux ou fibreux.

**13.** Dispositif d'atténuation du niveau sonore d'un circuit de fluide gazeux selon l'une des revendications 1 à 12, **caractérisé en ce que** la surface intérieure de la cavité (20) est recouverte totalement ou partiellement d'un matériau poreux ou fibreux.

**14.** Dispositif d'atténuation du niveau sonore d'un circuit de fluide gazeux selon la revendication 1 à 13, **caractérisé en ce que** la distance entre le conduit d'entrée et le conduit de sortie de chaque cavité, le rapport entre la surface de la section du conduit d'entrée et la surface de la section de chaque cavité, longueur de chaque conduit interne sont déterminés pour que la courbe d'atténuation du bruit du dispositif réponde à des critères d'atténuation fixés par l'utilisateur.

**15.** Dispositif d'atténuation du niveau sonore d'un circuit de fluide gazeux selon l'une des revendications 1 à 15, **caractérisé en ce qu'**au moins une cavité présente une section transversale non circulaire, l'entrée d'au moins un conduit dans cette cavité étant situé à une distance déterminée non nulle du barycentre de cette section.

**16.** Dispositif d'atténuation du niveau sonore d'un circuit de fluide gazeux selon l'une des revendications 4 à 16, **caractérisé en ce qu'**au moins deux cavités sont reliées entre elles par plus d'un conduit.

**17.** Dispositif d'atténuation du niveau sonore d'un circuit de fluide gazeux selon l'une des revendications 4 à 17, **caractérisé en ce que** deux cavités successives présentent des sections transversales d'une hauteur maximale différant de plus de 3 millimètres l'une de l'autre.

**18.** Dispositif d'atténuation du niveau sonore d'un circuit de fluide gazeux selon l'une des revendications 7 à 48, **caractérisé en ce qu'**il présente une première cavité d'une longueur comprise entre 33 mm et 37 mm, suivie d'une deuxième cavité d'une longueur comprise entre 37 mm et 41 mm, ces cavités étant séparées par une distance comprise entre 24 mm et 28 mm.

**19.** Dispositif d'atténuation du niveau sonore d'un circuit de fluide gazeux selon la revendication 19, **caractérisé en ce que** la première cavité présente un conduit interne d'une longueur comprise entre 27 mm et 31 mm, la deuxième cavité présentant un conduit interne d'une longueur comprise entre 19 mm et 23 mm.

**20.** Dispositif d'atténuation du niveau sonore d'un circuit de fluide gazeux selon l'une des revendications 1 à 20, **caractérisé en ce qu'**il comprend une enveloppe (1) creuse comportant au moins un conduit (10.1) d'entrée et un conduit (11.2) de sortie, le volume intérieur de cette enveloppe recevant une ou plusieurs pièces (3) additionnelles formant des cloisons (31, 32) transversales réalisant la séparation du volume intérieur en plusieurs cavités (20.1, 20.2), ou formant des parois (33, 34) prolongeant l'un ou les deux conduits d'entrée ou de sortie et réalisant les parois de conduits internes (100.1, 110.2).

**21.** Dispositif d'atténuation du niveau sonore d'un circuit de fluide gazeux selon la revendication 1 à 13, **caractérisé en ce que** les extrémités libres des conduits (100, 110) internes d'au moins une cavité (20) sont reliées entre elles ou à une pièce additionnelle intérieure par une pluralité de lamelles (35) rigides.

FIG 1

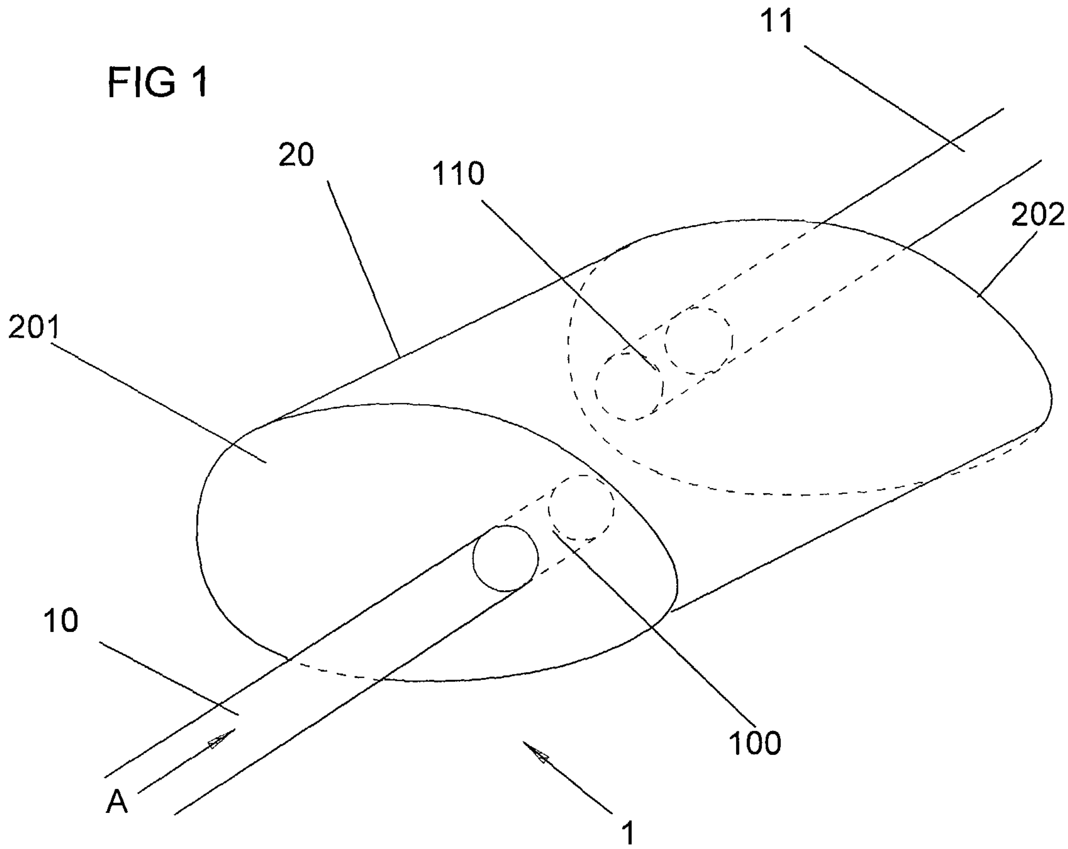
11
20
110
202
201
10
100
A
1

FIG 2

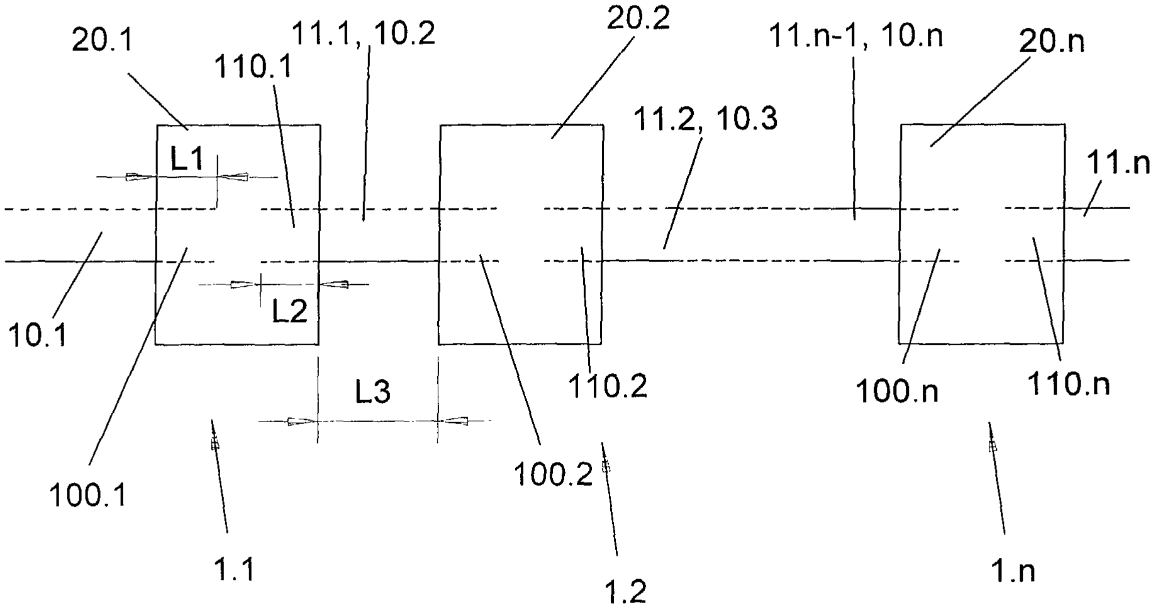
20.1
11.1, 10.2
110.1
20.2
11.n-1, 10.n
20.n
11.2, 10.3
L1
11.n
L2
10.1
L3
110.2
100.n
110.n
100.1
100.2
1.1
1.2
1.n

FIG 3A

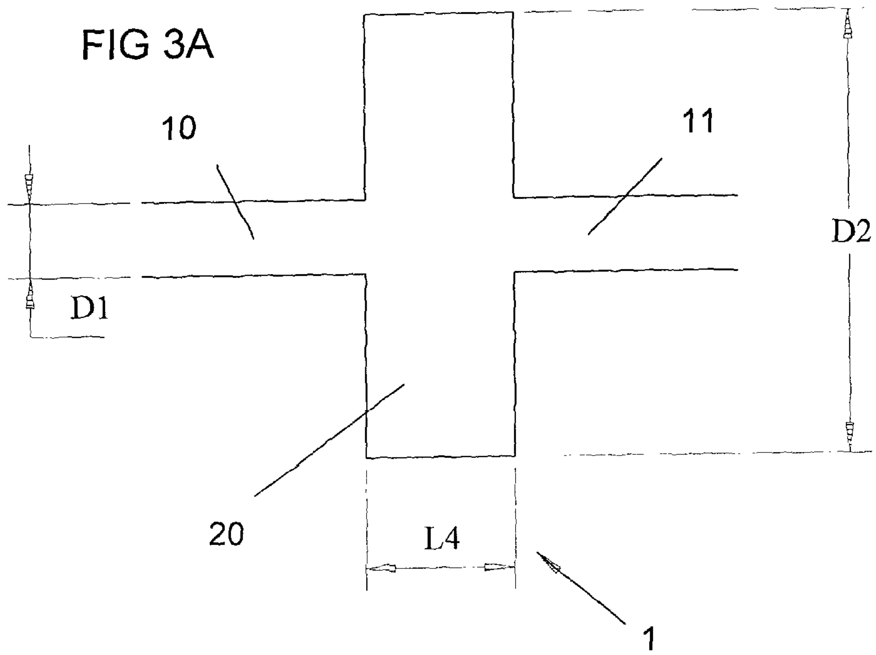
10
11
D2
D1
20
L4
1

FIG 3B

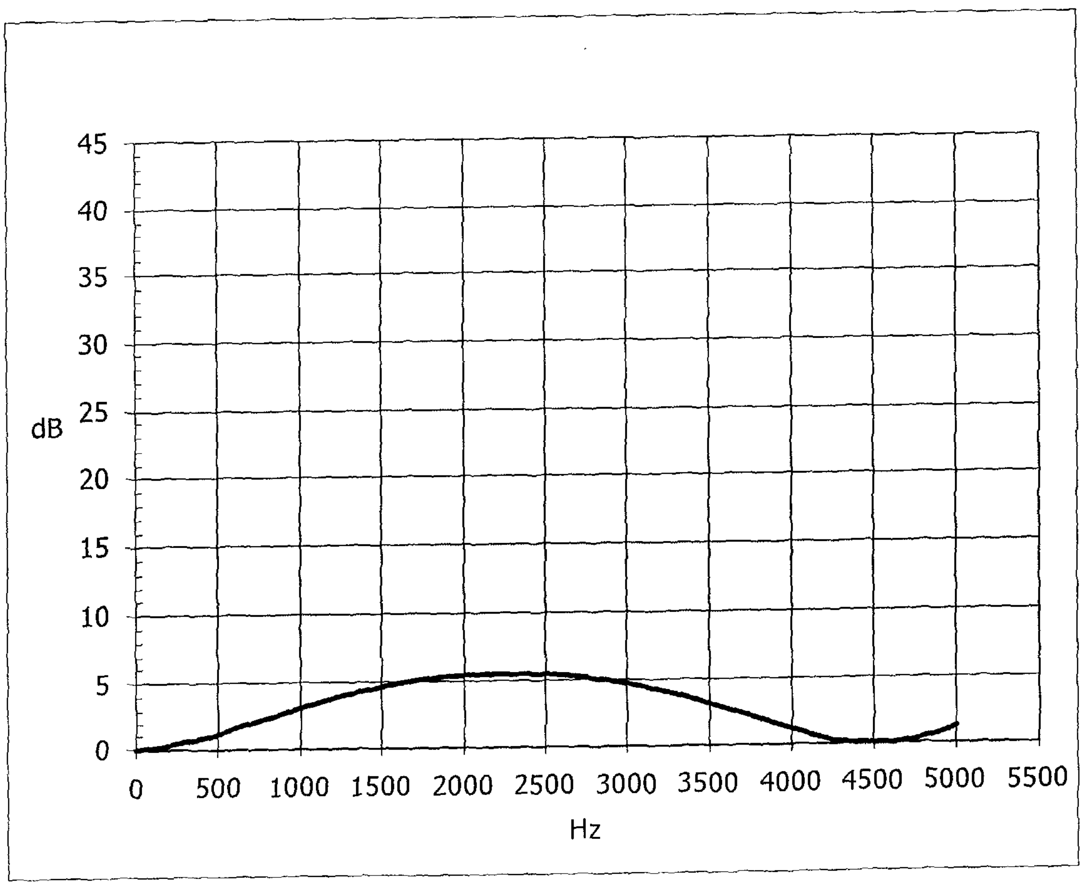
45
40
35
30
25
20
15
10
5
0
dB
0
500
1000
1500
2000
2500
3000
3500
4000
4500
5000
5500
Hz

FIG 4A

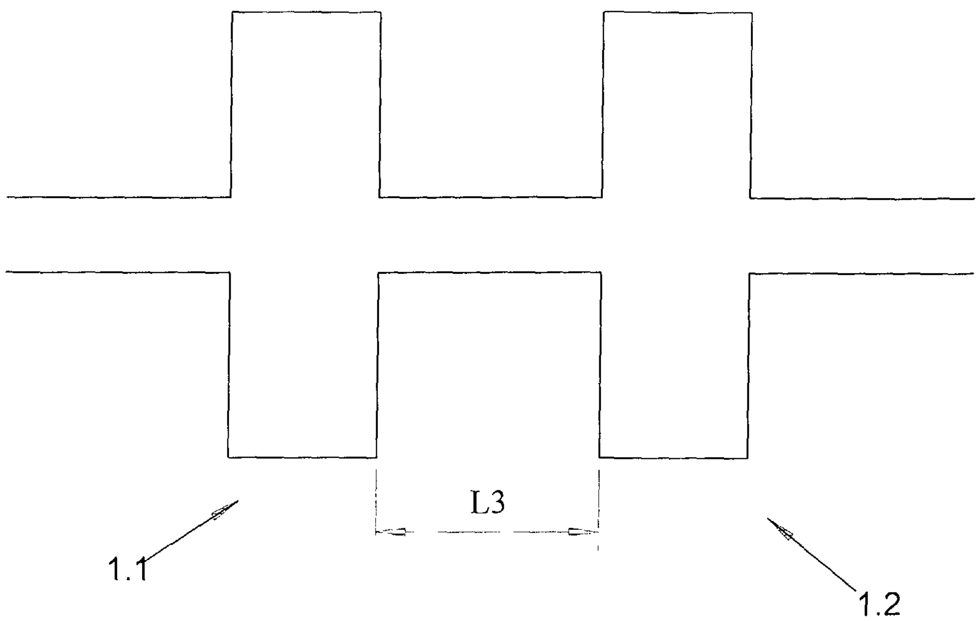
L3
1.1
1.2

FIG 4B

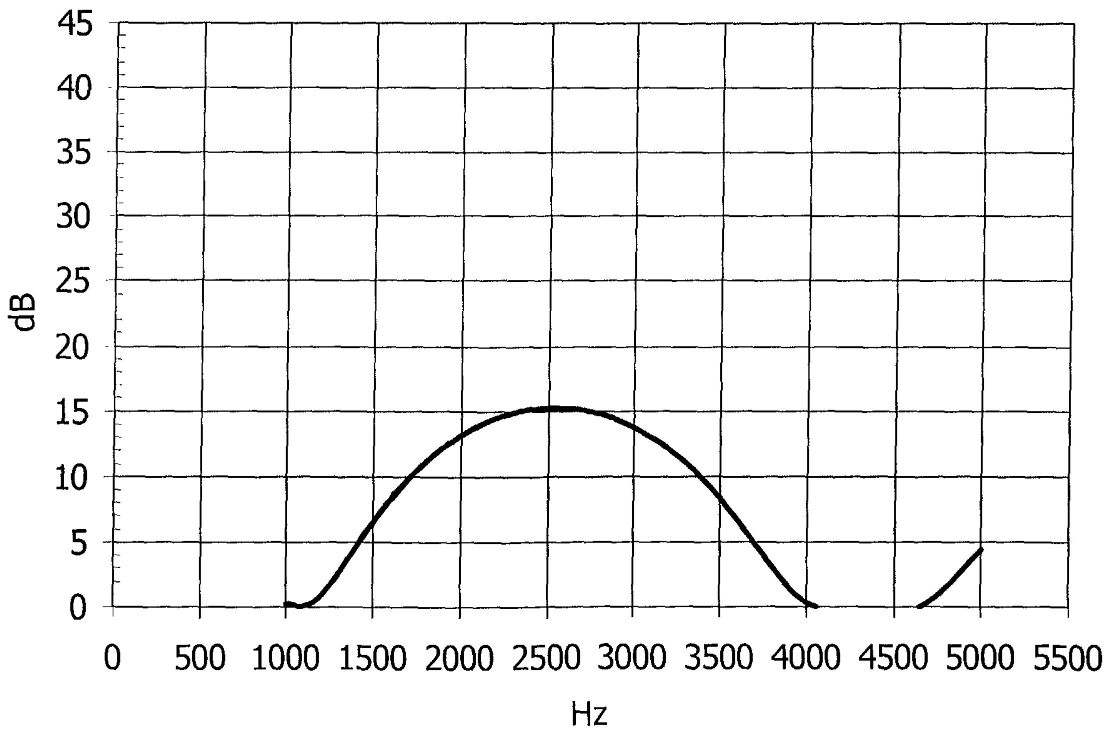
45
40
35
30
25
20
15
10
5
0
dB
0
500
1000
1500
2000
2500
3000
3500
4000
4500
5000
5500
Hz

FIG 5A

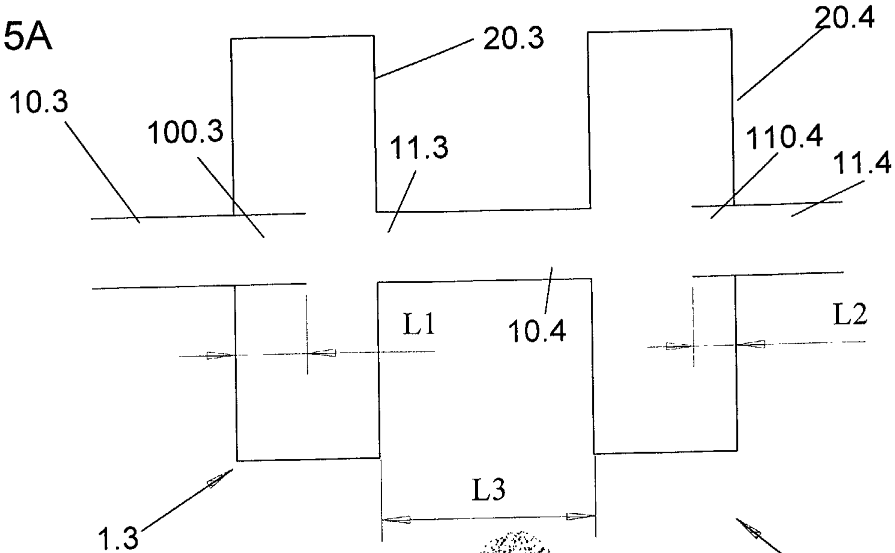


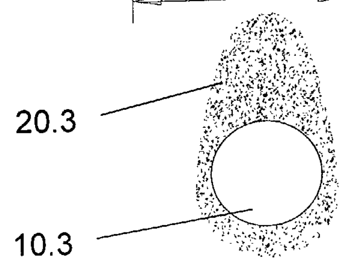


FIG 5B

FIG 5C

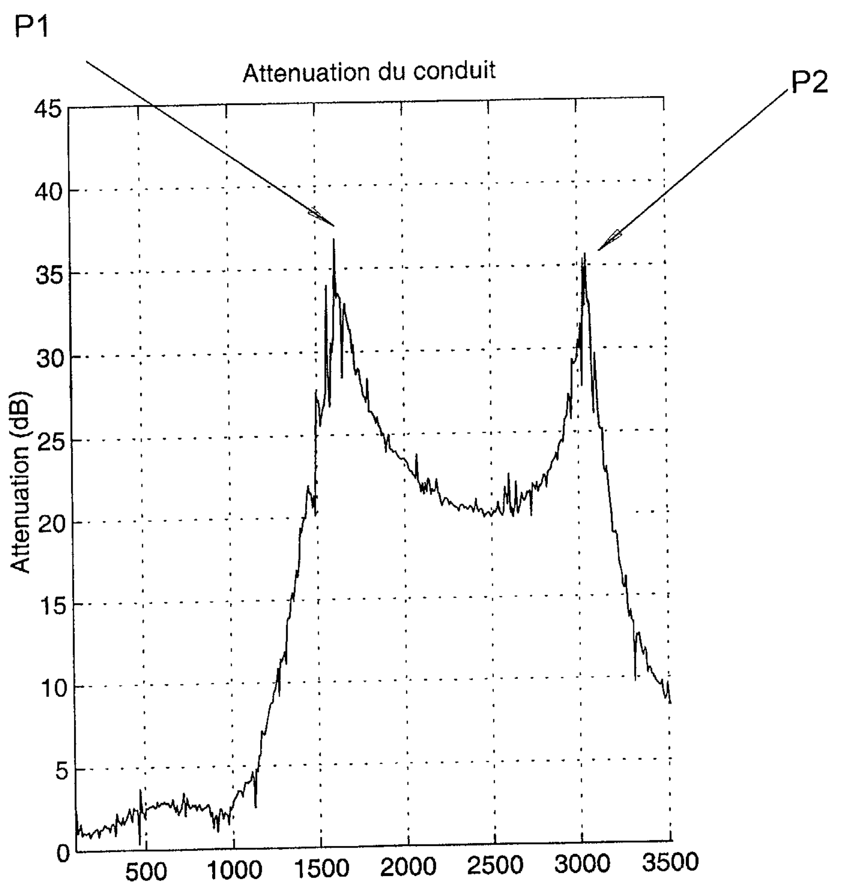

Fig.6A

Fig.6B

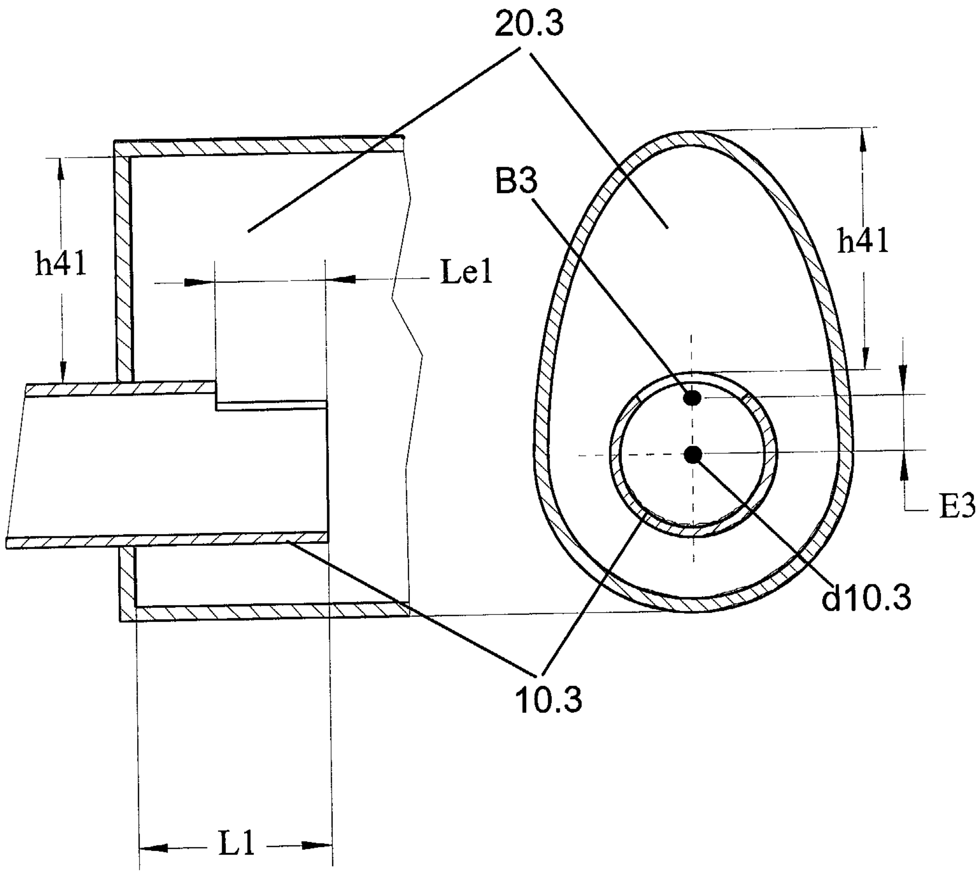

Fig.7

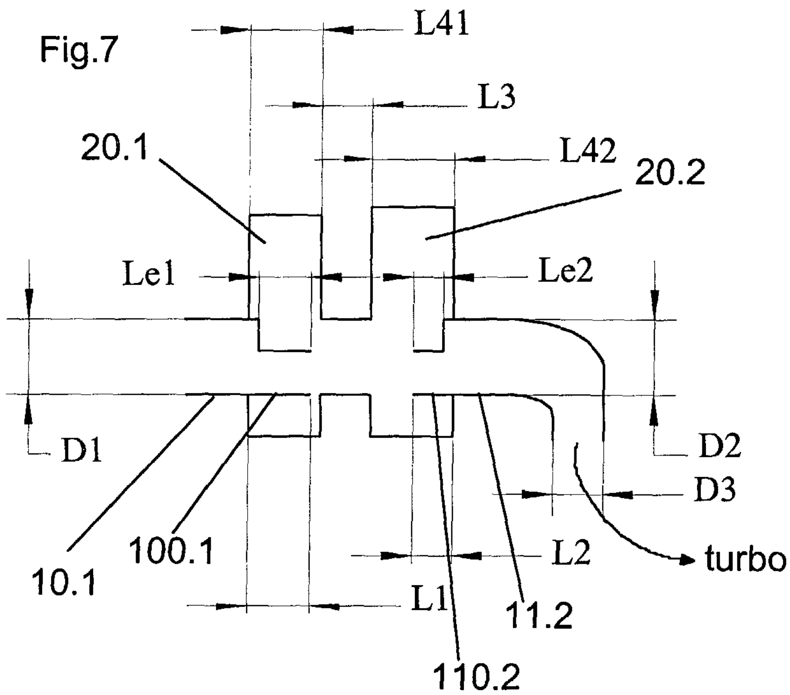
L41
L3
20.1
L42
20.2
Le1
Le2
D1
D2
D3
10.1
100.1
L2
turbo
L1
11.2
110.2

FIG. 7A

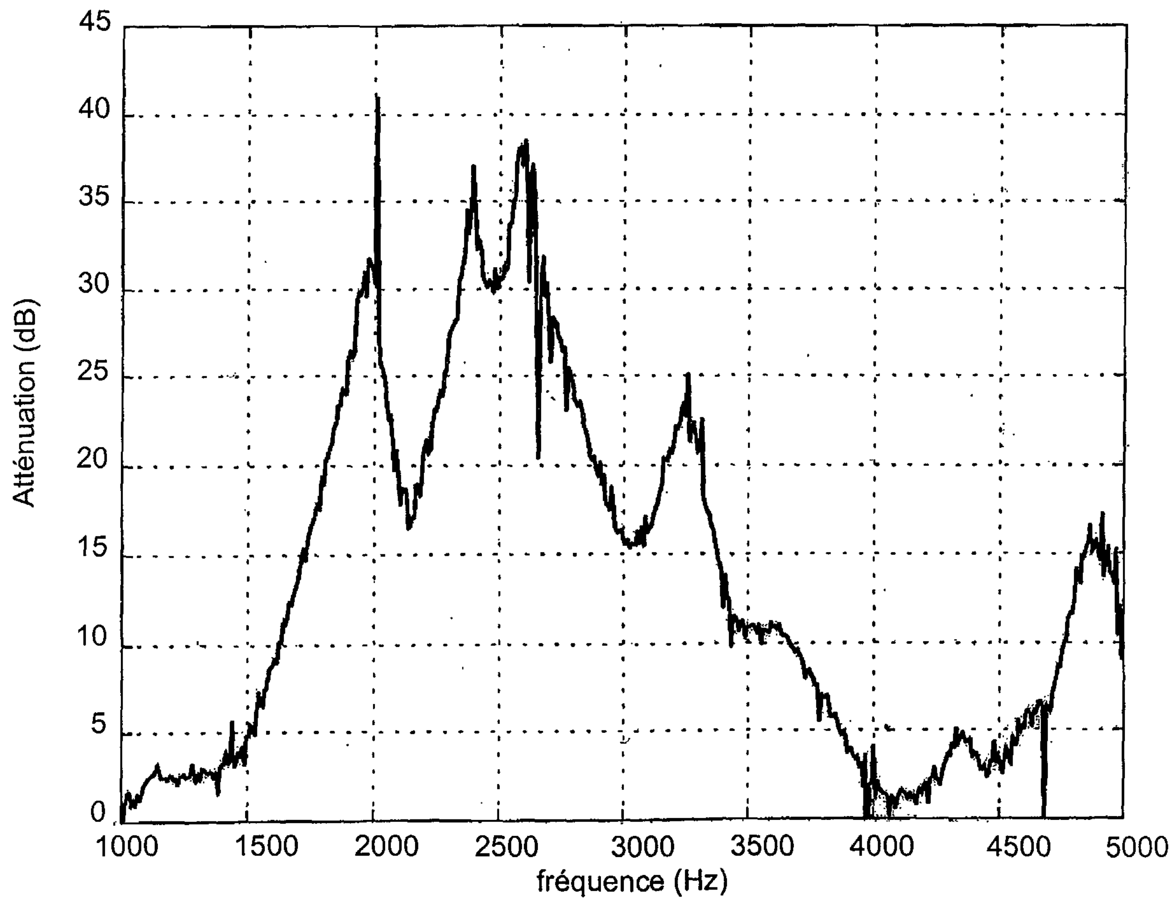
45
40
35
30
25
20
15
10
5
0
Atténuation (dB)
1000
1500
2000
2500
3000
3500
4000
4500
5000
fréquence (Hz)

Fig.8

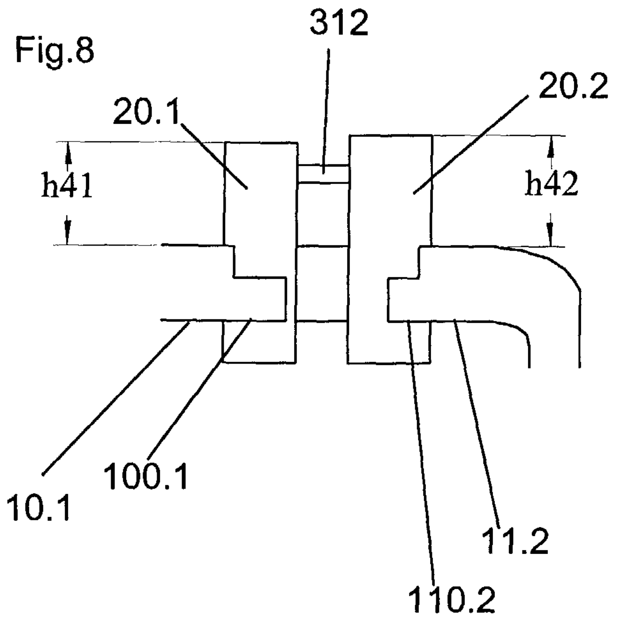
312
20.1
20.2
h41
h42
10.1
100.1
11.2
110.2

FIG. 8A

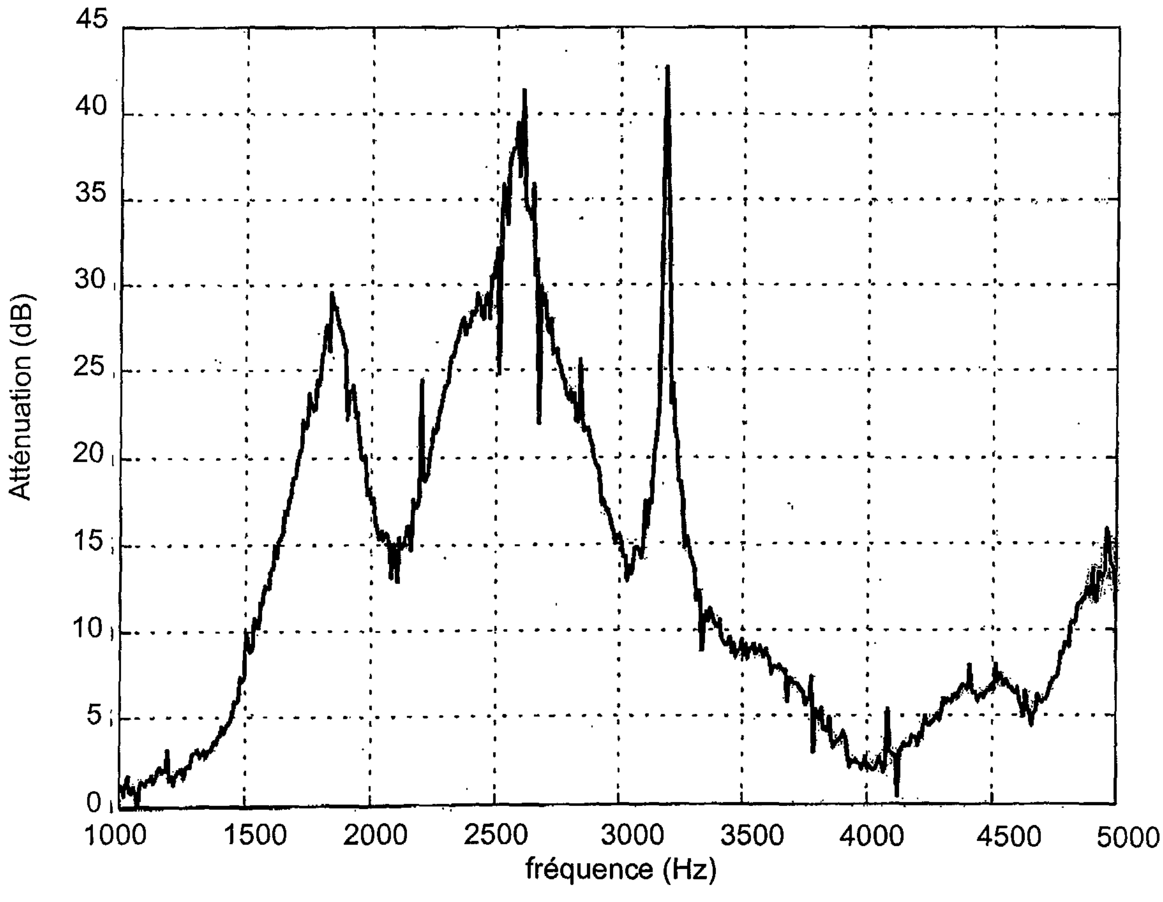
45
40
35
30
25
20
15
10
5
0
1000
1500
2000
2500
3000
3500
4000
4500
5000
Atténuation (dB)
fréquence (Hz)

Fig.9A

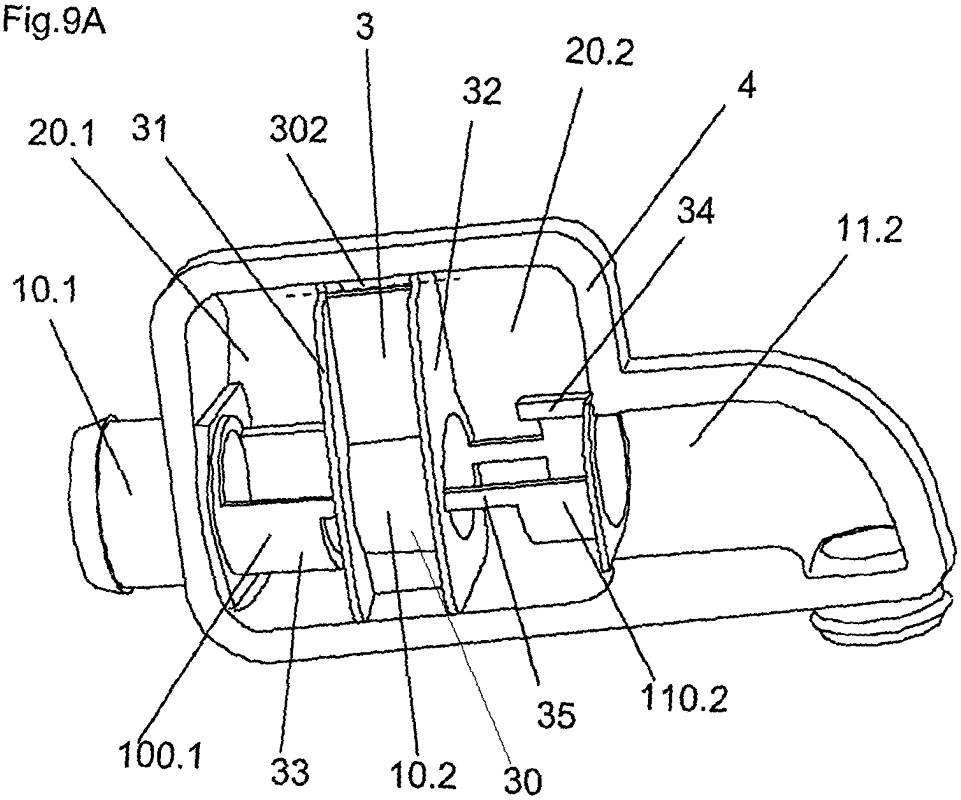


Fig.9B

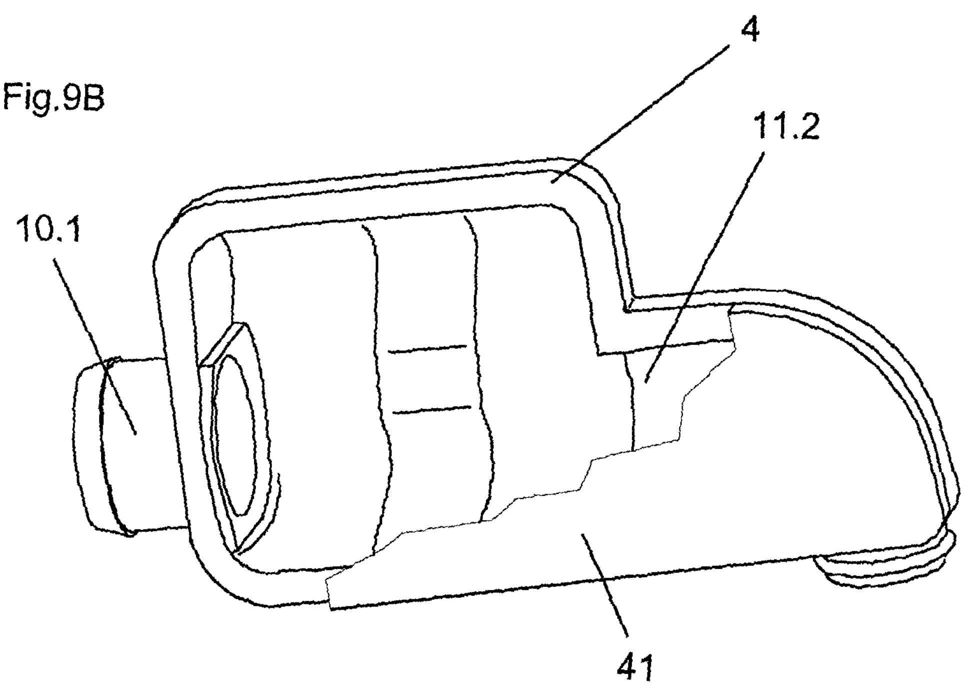

Office européen des brevets

# RAPPORT DE RECHERCHE EUROPEENNE

Numéro de la demande
EP 02 29 1121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | US 4 109 751 A (KABELE DENNIS FREDERICK) 29 août 1978 (1978-08-29) * colonne 1, ligne 52 - colonne 7, ligne 35; figures * | 1,8,9 | F16L55/033 F02M35/12 F01N7/00 F04B39/00 |
| A,D | DE 195 04 223 A (VOLKSWAGENWERK AG ;WOCO INDUSTRIETECHNIK GMBH (DE)) 14 août 1996 (1996-08-14) * colonne 1, ligne 68 - colonne 2, ligne 54; figures * | 1,8,9 | |
| A | US 5 677 518 A (FISCHER ANDREAS ET AL) 14 octobre 1997 (1997-10-14) * colonne 1, ligne 66 - colonne 4, ligne 44; figures * | 1,8,9 | |
| A | DE 617 831 C (KLUGE) 29 août 1935 (1935-08-29) * page 1, colonne de droite, ligne 35 - page 3, colonne de gauche, ligne 5; figures * | 1,4,7-9, 14 | **DOMAINES TECHNIQUES RECHERCHES (Int.Cl.7)** |
| A | US 5 628 287 A (BRACKETT STEPHEN E ET AL) 13 mai 1997 (1997-05-13) * colonne 2, ligne 33 - colonne 3, ligne 29; figures * | 1,8,9 | F16L F02M F01N F04B |
| A | US 1 910 672 A (BOURNE ROLAND B) 23 mai 1933 (1933-05-23) * page 1, colonne de gauche, ligne 40 - page 4, colonne de droite, ligne 96; figures * | 1,4,7-9, 14 | |
| A | FR 1 039 943 A (HATTE JACQUES-LOUIS) 12 octobre 1953 (1953-10-12) * page 2, colonne de gauche, ligne 4 - colonne de droite, alinéa 6; figures * | 1,4,7,9 | |
| | -/-- | | |

Le présent rapport a été établi pour toutes les revendications

| Lieu de la recherche | Date d'achèvement de la recherche | Examinateur |
|---|---|---|
| LA HAYE | 5 septembre 2002 | von Arx, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

Office européen des brevets

# RAPPORT DE RECHERCHE EUROPEENNE

Numéro de la demande
EP 02 29 1121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 167 984 B1 (GOETMALM ÖRIAN ET AL) 2 janvier 2001 (2001-01-02) * colonne 5, ligne 31 - colonne 9, ligne 38; figures * | 1,12,13 | |
| A | EP 0 666 408 A (EBERSPAECHER J) 9 août 1995 (1995-08-09) * colonne 3, ligne 18 - colonne 5, ligne 30; figures * | 1,12 | |
| A | GB 489 114 A (ABRAM RUPERT NEELANDS;KURT KLOPSTOCK; FRANCOIS CEMENTATION COMPANY L) 20 juillet 1938 (1938-07-20) * page 1, ligne 52 - page 2, ligne 46; figures * | 1,12,21 | |
| A | DE 21 34 178 A (VEB MONSATOR HAUSHALTGROSSGERÄTEKOMBINAT SCHWARZENBERG) 21 septembre 1972 (1972-09-21) * le document en entier * | 1,4,7-9, 14 | |
| | | | DOMAINES TECHNIQUES RECHERCHES (Int.Cl.7) |
| A | EP 0 411 195 A (MATSUSHITA REFRIGERATION) 6 février 1991 (1991-02-06) * colonne 4, ligne 4 - ligne 14; figures 1,4 * | 1,3 | |

Le présent rapport a été établi pour toutes les revendications

| Lieu de la recherche | Date d'achèvement de la recherche | Examinateur |
|---|---|---|
| LA HAYE | 5 septembre 2002 | von Arx, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 02 29 1121

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2002

| Document brevet cité au rapport de recherche | | Date de publication | Membre(s) de la famille de brevet(s) | | Date de publication |
|---|---|---|---|---|---|
| US 4109751 | A | 29-08-1978 | CA | 1085740 A1 | 16-09-1980 |
| DE 19504223 | A | 14-08-1996 | DE | 19504223 A1 | 14-08-1996 |
| US 5677518 | A | 14-10-1997 | DE | 4440918 A1 | 23-05-1996 |
| | | | AT | 199279 T | 15-03-2001 |
| | | | DE | 59509031 D1 | 29-03-2001 |
| | | | DK | 713046 T3 | 19-03-2001 |
| | | | EP | 0713046 A1 | 22-05-1996 |
| | | | ES | 2154314 T3 | 01-04-2001 |
| DE 617831 | C | 29-08-1935 | AUCUN | | |
| US 5628287 | A | 13-05-1997 | AUCUN | | |
| US 1910672 | A | 23-05-1933 | AUCUN | | |
| FR 1039943 | A | 12-10-1953 | AUCUN | | |
| US 6167984 | B1 | 02-01-2001 | SE | 506618 C2 | 19-01-1998 |
| | | | AU | 5503998 A | 15-07-1998 |
| | | | CN | 1247588 A | 15-03-2000 |
| | | | EP | 0958449 A1 | 24-11-1999 |
| | | | NO | 993047 A | 05-08-1999 |
| | | | SE | 9604664 A | 19-01-1998 |
| | | | WO | 9827321 A1 | 25-06-1998 |
| EP 0666408 | A | 09-08-1995 | DE | 4403099 A1 | 03-08-1995 |
| | | | CZ | 9500221 A3 | 16-08-1995 |
| | | | EP | 0666408 A1 | 09-08-1995 |
| GB 489114 | A | 20-07-1938 | AUCUN | | |
| DE 2134178 | A | 21-09-1972 | DE | 2134178 A1 | 21-09-1972 |
| | | | HU | 171141 B | 28-11-1977 |
| EP 0411195 | A | 06-02-1991 | EP | 0411195 A1 | 06-02-1991 |
| | | | DE | 68919845 D1 | 19-01-1995 |
| | | | DE | 68919845 T2 | 13-07-1995 |
| | | | EP | 0588381 A2 | 23-03-1994 |
| | | | US | 4990067 A | 05-02-1991 |

EPO FORM P0460

Pour tout renseignement concernant cette annexe : voir Journal Officiel de l'Office européen des brevets, No.12/82